(19) Europäisches Patentamt
European Patent Office
Office européen des brevets

(11) **EP 0 719 236 B1**

(12) **EUROPEAN PATENT SPECIFICATION**

(45) Date of publication and mention
of the grant of the patent:
**29.04.1998 Bulletin 1998/18**

(21) Application number: **94926313.1**

(22) Date of filing: **13.09.1994**

(51) Int Cl.[6]: **C01B 17/04**, B01D 53/34,
B01J 8/02

(86) International application number:
**PCT/GB94/01993**

(87) International publication number:
**WO 95/07855 (23.03.1995 Gazette 1995/13)**

(54) **IMPROVEMENTS IN OR RELATING TO SULPHUR PRODUCTION FROM SULPHUR-BEARING GAS STREAMS**

VERBESSERUNGEN IN ODER BEZüGLICH DIE HERSTELLUNG VON SCHWEFEL AUSGEHEND VON SCHWEFEL ENTHALTENDE GASSTRöME

AMELIORATIONS RELATIVES A LA PRODUCTION DE SOUFRE A PARTIR DE FLUX DE GAZ CONTENANT DU SOUFRE

(84) Designated Contracting States:
**AT BE CH DE DK ES FR GB GR IE IT LI NL PT SE**

(30) Priority: **14.09.1993 GB 9319033**

(43) Date of publication of application:
**03.07.1996 Bulletin 1996/27**

(73) Proprietor: **PARSONS GROUP INTERNATIONAL LIMITED**
**Brentford, Middlesex TW8 0EH (GB)**

(72) Inventors:
• **CROSS, Peter, Frank**
**Surrey KT2 6HU (GB)**
• **SARSSAM, Amer**
**Surrey SM2 7LG (GB)**

(74) Representative: **Jackson, Peter et al**
**HYDE, HEIDE & O'DONNELL**
**10-12 Priests Bridge**
**London SW15 5JE (GB)**

(56) References cited:
**DE-A- 2 719 366**      **DE-A- 3 708 957**
**FR-A- 2 605 304**      **US-A- 4 801 443**

• **CHEMICAL ABSTRACTS, vol. 107, no. 12, 21 September 1987, Columbus, Ohio, US; abstract no. 99148s, YU. SH. MATROS ET AL. 'Unsteady-state catalytic manufacture of sulfur by Claus method' page 146 ;**
• **PROC INT CONF: UNSTEADY STATE PROCESSES IN CATALYSIS; NOVOSIBIRSK (USSR), 5-8.6.1990 Ed. Yu Matros, VSP Utrecht (NL), page 705-712, by A.N. Zagoruiko**

**Description**

This invention relates to an improved process for recovery of elemental sulphur from sulphur-bearing gas streams. It is concerned in particular with treatment of the sulphur-bearing vapours in the catalytic stages of a Claus plant downstream of the thermal treatment stage.

Several industrial processes, particularly in the refining of hydrocarbons and metals, produce gas streams that contain sulphurous materials, especially hydrogen sulphide and sulphur dioxide. Such processes include the processing or refining of natural gas, petroleum crude oil, tar sands and bitumen or shale oil, the liquefaction or gasification of coal and the smelting of metal sulphide ores. The sulphurous stream often results from hydrogenation of sulphur compounds in the starting material for refining operations or of sulphur-containing fractions in natural gas streams. If carbon dioxide and hydrocarbons are present in the gas stream, which typically occurs if the source of the gas stream is an oil refinery or a natural gas plant, small amounts of carbonyl sulphide and carbon disulphide may also be present.

Since the discharge of sulphurous materials is restricted by environmental legislation and since the sulphur is itself of industrial use, such streams are usually treated to extract the sulphur content.

The process of the present invention is particularly well suited to the recovery of sulphur from hydrogen sulphide-containing streams from a Claus plant and is primarily described herein with reference to that application.

The Claus process is an established way of treating a gas stream including hydrogen sulphide. In this process a proportion, typically one third, of the hydrogen sulphide content of the stream is subjected to a thermal reaction stage which comprises burning the hydrogen sulphide in a furnace to form sulphur dioxide and water vapour. The sulphur dioxide then reacts in the furnace with unburnt hydrogen sulphide to form elemental sulphur vapour and water vapour. The stoichiometry of the main sulphur-forming reactions is shown in the following equations, the second of which (referred to herein as "the Claus reaction") represents an equilibrium reaction which is temperature dependent.

$$2H_2S + 3O_2 \rightarrow 2H_2O + 2SO_2 \qquad\qquad (1)$$

$$2H_2S + SO_2 \rightarrow 2H_2O + 3/_nS_n \qquad\qquad (2)$$

The overall reaction may be written as follows:

$$2H_2S + O_2 \rightarrow 2H_2O + 2/_nS_n \qquad\qquad (3)$$

"n" in reactions (2) and (3) represents the number of atoms in the product sulphur molecule. This number varies with the temperature of the reaction.

Typically, 60% of the sulphur content of the starting gas stream is converted to elemental sulphur in the thermal reaction stage in the furnace. The exit gas stream from the furnace is cooled, for example in a waste heat boiler and sulphur condenser, to separate out the elemental sulphur by condensation. The vapour content of the residual stream typically contains hydrogen sulphide, sulphur dioxide, carbon oxysulphide and carbon bisulphide, nitrogen, water vapour, carbon dioxide, together with smaller quantities of carbon monoxide, hydrogen and hydrocarbons (depending on the operation of the thermal stage).

Instead of a thermal stage a process utilising an oxidation catalyst may be used, as in the Selectox and Recycle Selectox processes. The process gas outlet from such a catalytic stage resembles that from a thermal process in that it can be treated by further catalytic Claus stages to produce elemental sulphur.

To achieve further sulphur production from a residual gas stream it is reheated, typically to a temperature in the range of 200 to 260°C, and brought into contact with a catalyst which assists the forward reaction (2) between hydrogen sulphide and sulphur dioxide, thereby forming further sulphur vapour and water vapour. Again the sulphur vapour is then removed by a condensation step.

The catalyst-assisted reaction (2) is conducted in one or more beds of the catalyst, with a condenser downstream of each bed to separate out the elemental sulphur vapour produced in the bed. With three such catalytic steps following a thermal reaction and condensation stage, it is typically possible to achieve about 97% conversion of the hydrogen sulphide in the original gas stream to elemental sulphur. Under the increasingly rigorous environmental regulations, however, 97% conversion may not be sufficient to meet the required standards.

In the tail gas from such reactions there is some remaining sulphur in the form of unconverted hydrogen sulphide, sulphur dioxide, sulphur vapour and traces of carbon-sulphur compounds. Several processes are available for treating the tail gas so as to satisfy more stringent emission standards. Tail gas treatment typically includes a hydrogenation step to reconvert any residual sulphur back to hydrogen sulphide, followed by steps such as further catalytic treatment or contact with a hydrogen sulphide absorbent such as a methyldiethanolamine solution. Such tail gas treatment does however involve significant further costs in terms of both the additional plant and utilities required. Attempts have therefore been made to increase the conversion efficiency of other stages of the recovery process.

One family of improved-efficiency processes, collectively known as "sub dew point" processes, employs low temperature operation of beds of catalyst to encourage the forward reaction (2) between hydrogen sulphide and sulphur dioxide. The low temperature favours sulphur formation by moving the reaction equilibrium to the right. These processes, however, have the disadvantage that at the required low temperature the sulphur is below its dew point and condenses in significant quantities on the catalyst or within its pores, thereby blocking the active sites. A catalyst bed operated under these conditions thus becomes progressively loaded with sulphur and deactivated, thereby hindering or preventing further sulphur recovery from the feed stream.

Such a deactivated catalyst bed can be regenerated by passing hot gas through it to vaporise the sulphur. One proposal to achieve this has been to regenerate the bed "on-line" by passing through it a stream of hot process gas to reheat it fully, but this leads to a loss of conversion because the equilibrium of the reaction (2) does not favour sulphur-forming at the high temperatures of the regeneration.

In a paper delivered to the 1990 International Conference "Unsteady State Processes in Catalysts" at Novosibirsk, published by VSP Utrecht (NL), 1990, pages 705-712 (Editor Yuri S Matros), A N Zaguruiko refers to work by Matros and himself, including a 1981 paper from the Institute of Catalysis, Siberian branch of the Soviet Academy of Science, on the periodic reversal of reaction gas flow - the Claus reverse process. While primarily concerned with studies of the Claus reverse process by mathematical modelling, the 1990 paper mentions much of the history of the Claus process, from its invention by Claus more than 100 years ago and its use for more than 60 years. Zaguruiko also mentions the processes in which the sulphur recovery reaction [shown as (2) above] is performed at temperatures below the sulphur dew point, as described for example in Supplement Sulphur, (1986), 187 and Sulfreen-Hydrocarbon Proc. (1979), 58, p 140.

One of the Matros/Zaguruiko patents on their work is Fr-A-2605304, in which elemental sulphur is separated from a gas stream at more than 120°C in a catalyst bed, with periodic reversal of the direction in which the gas is introduced and a subsequent evacuation of the separated sulphur, characterised by the use of a catalyst bed divided into different vertical sections.

DE-A-2719366 teaches an on-line regeneration method in which a high average conversion is achieved by a low temperature reaction phase with simultaneous sulphur separation (i.e. sulphur deposition on a catalyst bed) followed by a high temperature reaction phase with simultaneous sulphur regeneration (i.e. sulphur removal from the catalyst bed). The separation phase takes place over a relatively long period (typically 6-8 hours), permitting significant build-up of sulphur on the catalyst bed which reduces the conversion value of the Claus reaction. This build-up is counteracted by a relatively short regeneration phase (typically 1 hour), during which the conversion value is also much reduced.

A similar method is described in the paper "Enhanced Process Configurations for the CBA Process" by D K Stevens and W H Buckhannan, published in British Sulphur No. 225, March - April 1993, especially at pages 42-44.

Such on-line regeneration methods have not often been commercially adopted because of long-term catalyst deactivation problems and increased sulphurous emissions during the regeneration phase. If a tail gas unit is used the load on it increases significantly during the regeneration phase (e.g. by factors of 3.5 and 2.8 in the examples from DE-A-2719366), making for difficulties in its operation.

Another proposal has been to take the deactivated bed "off-line" and switch the feed gas stream to a fresh catalyst bed. This method has the disadvantages, however, of requiring the use of an additional "swing" catalyst bed or beds and of the associated use of switching valves, which have historically required intensive maintenance.

Some of the prior regeneration methods also have the disadvantage of adding to the utility requirements a supply of hot inert gas, typically provided by burning fuel gas with a slight deficiency of air to eliminate free oxygen.

The present invention relates to a process which simultaneously removes sulphur deposits from a catalyst bed while the reaction for sulphur formation remains in progress at low temperature in a separate part of the same catalyst bed.

According to the present invention, there is provided a continuous process for recovering elemental sulphur from a sulphur-bearing gas stream in a bed of catalytic material in which the sulphurous material in the gas stream is converted to elemental sulphur, characterised in that the gas stream is moved unidirectionally through the bed and cold and hot temperature zones are created in the bed by intermittent application of heat to the feed gas stream so that a varying temperature profile is cyclically moved through the bed such that at least part of the bed is maintained as a "cold" zone at a temperature in the range 125 to 180°C to promote the conversion to elemental sulphur and each part of the bed periodically becomes a "hot" zone at a temperature in the range 190 to 375°C to effect removal from the bed of elemental sulphur deposited thereon, wherein the temperature profile is such that the bed contains more than one cold zone for at least part of the cycle and more than one hot zone for at least part of the cycle.

The process of the invention can conveniently be regarded as a cyclic sequence comprising the passage of a cold zone alternating with a hot zone through a catalyst bed. During the periods when the respective part of the bed becomes a "hot" zone the bed simultaneously contains both "hot" and "cold" zones, such that the same bed is simultaneously supporting both the removal of sulphur deposits and the reaction for sulphur formation. The invention further achieves a relatively constant tail gas composition, thereby avoiding any significant peaks in sulphurous emissions or variations in duty imposed on any associated tail gas treatment unit.

The improved sulphur recovery efficiency and reduced sulphurous emissions achieved by the process of the invention thus serve to reduce the duty imposed on any such tail gas unit and in some instances can meet local environmental regulations without the need for the tail gas unit.

The process provides the benefit that the reaction to produce sulphur is continuous at a fast rate, achieving high conversion throughout the cold cycle, and the hot cycle provides on-line regeneration of the catalyst bed without unduly reducing the rate of sulphur recovery from the feed stream. It thus permits more efficient use of the catalyst bed. The unidirectional flow of the gas stream through the bed avoids the need for a switching system and associated control valves. The invention is of especial merit in plant terms since it allows continuous operation of the plant in its sulphur recovery mode, using a similar configuration to a conventional Claus plant.

A major concern with prior catalytic sulphur recovery processes was a fear of the permanent de-activation of the catalyst due to unvaporised sulphur or sulphur compounds blocking the active sites. The process of the invention provides the benefit that deposited sulphur is removed before it builds up to significant quantities on the catalyst material such that damage to the catalyst bed is avoided and the catalyst material remains active for a prolonged period.

The required temperature zones in the bed are achieved by intermittent application of heat to the feed gas stream leading to the bed. Suitable forms of heating include an indirect heater using a medium such as steam or hot oil, electricity, other hot gases such as hot process gases, or by the exhaust from fuel combustion. Alternatively, a direct heater can be used in which hot process gases or products of combustion are mixed with the stream to be heated.

Viewed at any given point in the bed the catalyst at that point is alternately at a low temperature which causes the reaction (2) to proceed further to the right while permitting the so-formed sulphur to deposit itself partially upon the catalyst bed, and then at a high temperature which effects the vaporisation of the deposited sulphur while still permitting some ongoing sulphur generation. The temperature at which sulphur deposition occurs is related to the operating conditions in the bed, which affect the sulphur dew point. As the bed temperature falls, progressively more sulphur is deposited and at temperatures below 180°C the amount of deposition is generally sufficient to cause the catalyst to lose activity.

The required temperature profile is achieved by intermittently heating the feed gas stream. This stream satisfies the dual purpose of introducing heat to raise the bed to the sulphur vaporisation temperature and of serving as a carrier gas to sweep the sulphur vapour out of the bed. Since the transitions between the required cold temperature range and hot temperature range are not instantaneous, there also pass through the bed, immediately upstream and downstream of the each of the cold and hot zones, other zones at temperatures intermediate between the cold and hot zone temperatures.

The process of the invention obtains a high conversion to elemental sulphur by using the principle of sub-dew point operation but overcomes the problems associated with removing condensed sulphur by making a novel use of the Claus reaction kinetics. The forward reaction of equation (2) is rapid on the catalyst surface while the reverse reaction is relatively slow. This occurs during stages of Claus plant operation in which sulphur is removed from the catalyst beds by means of an inert (oxygen-free) gas sweep, for example prior to a plant shutdown. No significant formation of hydrogen sulphide is observed, despite the prevailing typical Claus reaction conditions and even though the inert gas stream contains water vapour and the beds contain significant amounts of sulphur.

The inventors believe that the slowness of the reverse reaction is due to the poly-atomic nature of the sulphur molecule once it has formed. Under the conditions within the bed the sulphur produced is typically S6 or S8 and as such does not readily react with the available water vapour.

This means that it is possible to achieve high conversion if a sufficient "cold" zone exists within a catalyst bed even when other parts of the bed are "hot". The relative volumes of the hot and cold zones in the catalyst bed can be achieved by appropriately varying the heat input to the bed by alternating between feeding a gas stream at a temperature in the defined hot range and a gas stream at a temperature in the defined cold range.

The proportion of the bed that is within the required cold temperature range at any given point of time, i.e. the total size of the cold zone(s), can be relatively small, typically 10 to 40% of the total bed volume. For operational convenience the proportion within the required hot temperature range is normally substantially the same as that of the cold zone(s). The remainder of the bed will be at intermediate temperatures ranging between the hot and cold zone temperatures. The intermediate zones are again usually of substantially the same volume as each other. The temperature profile through the bed is thus generally a fairly gentle curve with a trough in each cold zone rising smoothly through an intermediate zone to a peak in the adjacent hot zone and smoothly back to the next trough.

The effectiveness of the process of the invention even when the proportion of the bed operating in the cold, sulphur-forming, mode is a relatively small proportion of the total bed volume appears to be assisted by the excellent active condition of the catalyst that is maintained by the process of the invention.

Operating temperatures for the heating and cooling cycles range from 125 to 180°C for the cold zone and 190 to 375°C for the hot zone. The preferred cold and hot temperature ranges are respectively 125 to 160°C and 200 to 300°C. Cycle times (hot to cold to hot) are preferably between 30 minutes and 4 hours, although shorter or longer cycle times may be possible depending on such factors as the size of the plant, throughput, turndown and the required recovery level.

To achieve the highest levels of sulphur recovery it is preferred to use more than one bed of catalyst, typically 2 to 4 beds depending on the specific feed material and throughput. If the feed stream from the thermal stage reaction furnace contains carbon-sulphur compounds, it is convenient for the first bed or beds in a multi-bed arrangement to be operated continuously at high temperature, preferably at about 300°C gas outlet temperature, in order to to destroy these compounds.

With a unit having two or more catalyst beds there are many different options of continuous temperature and cyclic temperature, for example:

2-beds with the second bed in cyclic operation;
3-beds with the third bed in cyclic operation;
3-beds with the second & third beds in cyclic operation;
4-beds with the fourth bed in cyclic operation;
4-beds with the third & fourth beds in cyclic operation;
4-beds with the second, third and fourth beds in cyclic operation.

In cases where a catalytic oxidation stage is used in place of the thermal stage, there are normally only traces of carbon-sulphur compounds in the process gas from this catalytic oxidation. In such cases, high temperature operation of the first Claus bed is not normally required and the bed can be operated with advantage in cyclic mode according to the invention so as to increase sulphur recovery.

Suitable catalysts for use in the bed(s) include alumina, promoted alumina, titania and mixtures thereof. These materials promote both the Claus reaction and the breakdown of carbon-sulphur compounds.

Each catalyst bed is typically one metre deep and may be up to several metres wide. It has considerable thermal "inertia" so that a change in the gas feed temperature will not immediately be reflected in a change in bed temperature or in in the outlet gas temperature. This "lag" is typically a half to three hours, depending on operating conditions. This thermal inertia is advantageous for the process of the invention by permitting a non-uniform temperature profile to be set up through the bed, thereby facilitating the establishment of the alternate cold and hot zones in the same bed. With the imposed variations of the gas feed temperature into the bed, the cold and hot catalytic zones sweep through the bed causing high sulphur recovery and the associated sulphur deposition within the cold zone, followed by sulphur desorption and "regeneration" of the catalyst in the hot zone. Surprisingly in the hot zones any reverse reaction of the formed sulphur is limited. As discussed above, this retention of sulphur in the elemental form appears to be due to the kinetic hindering of the reverse reaction (2).

As long as a sufficient cold zone exists within a bed, a high conversion can be achieved according to the Claus reaction at low temperature. In this manner a continuous unsteady state process is established which achieves Claus conversions appropriate to sub-dew point operation without the disadvantages of the prior art such as switching beds, additional equipment or loss of conversion efficiency.

The invention is described in further detail below with reference to the accompanying drawings, in which:

Figure 1 is a schematic flow diagram of a two-stage sulphur recovery unit.

Figure 2 is a schematic flow diagram of a three-stage sulphur recovery unit.

Figure 3 is a schematic flow diagram of a four-stage sulphur recovery unit.

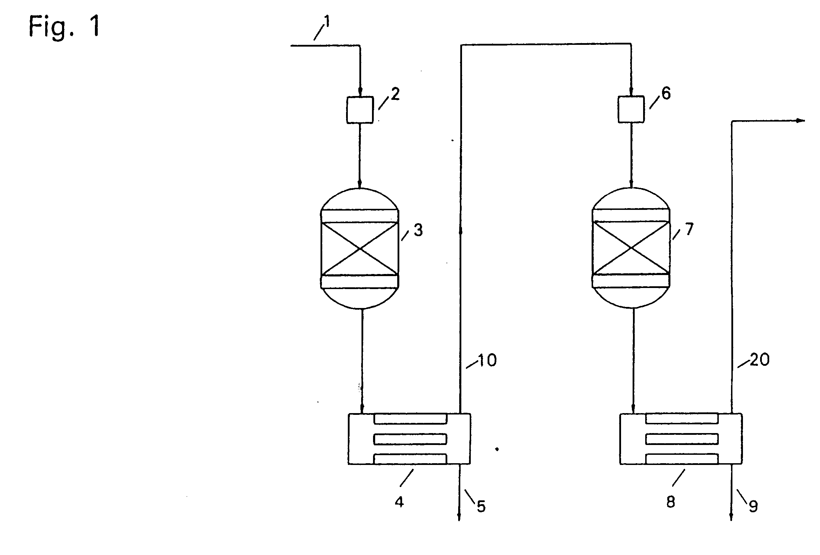

The unit shown in Figure 1 includes a gas feed line 1 from a condenser (not shown) of a Claus thermal reaction furnace (not shown) passing through a reheater 2 using steam as the heat source. From the reheater 2 the line 1 leads to a first catalyst bed 3 containing an alumina catalyst and thence to a sulphur condenser 4, with a liquid sulphur outlet 5. The condenser 4 is of a water-cooled type and generates low pressure steam as a by-product. A gas outlet line 10 from the condenser 4 leads in sequence to a second steam-heated reheater 6, a second alumina catalyst bed 7 and to a further water-cooled condenser 8, which has a liquid sulphur outlet 9 and gas outlet line 20.

In operation of the Figure 1 unit, vapours from the thermal Claus stage are fed via the line 1 to the reheater 2. Although this reheater 2 could be operated in cyclic mode according to the invention, it is normally operated to maintain the feed stream reaching the first catalyst bed 3 at a high uniform temperature in the range 220 to 250°C and thereby to maintain the outlet temperature above approximately 300°C. With such temperatures, any carbon-sulphur compounds in the thermal stage reaction products are largely or totally destroyed in the bed 3.

The exit vapours from the first catalyst bed 3 are typically at a temperature in the range 290 to 350°C. These vapours are cooled in the sulphur condenser 4, producing low pressure steam [typically 0.3 to 0.5 MPa absolute (2 to 4 bar g)] which can be utilised as a by-product. Condensed sulphur is removed through outlet 5 and the cooled vapours pass to the second reheater 6 through line 10. The reheater 6 operates in the cyclic mode required by the process of the invention to pass alternately cold and hot streams to the catalyst bed 7 to create alternate cold and hot zones therein.

The minimum temperature of the reheat cycle is set by the condenser 4 outlet temperature and is generally 140°C to 175°C, except for plants where utility steam is not required, in which case it is possible to operate the condenser 4 at a lower temperature and so the minimum cycle temperature can be reduced to as low as 125°C, with the resultant benefit of an increase in sulphur conversion. The upper temperature is achieved by the appropriate selection of heat input from the reheater 6. It is selected according to the requirement to desorb sulphur from the catalyst and is typically 200 to 220°C or higher.

The length of the heating and cooling periods of the operating cycle are selected and controlled to ensure that the catalyst bed 7 contains the required zones: cold typically at 140 to 175°C and hot typically at 200 to 240°C.

As discussed above, the presence of the cold zone(s) within the bed favours sulphur formation by the equilibrium reaction (2), and at least some of the the sulphur formed in the cold zone is deposited on the catalyst. During the high temperature part of the cycle the deposited sulphur is vaporised. Throughout the cycle the exit vapours from the catalyst bed 7 pass to the condenser 8 which cools the process vapours, producing low pressure steam typically at 120 to 150°C. Condensed sulphur is removed through the outlet 9 and the remaining vapour stream is discharged through the exit line 20.

The discharged vapour stream can be incinerated or subjected to further tail gas treatment before it is vented to atmosphere.

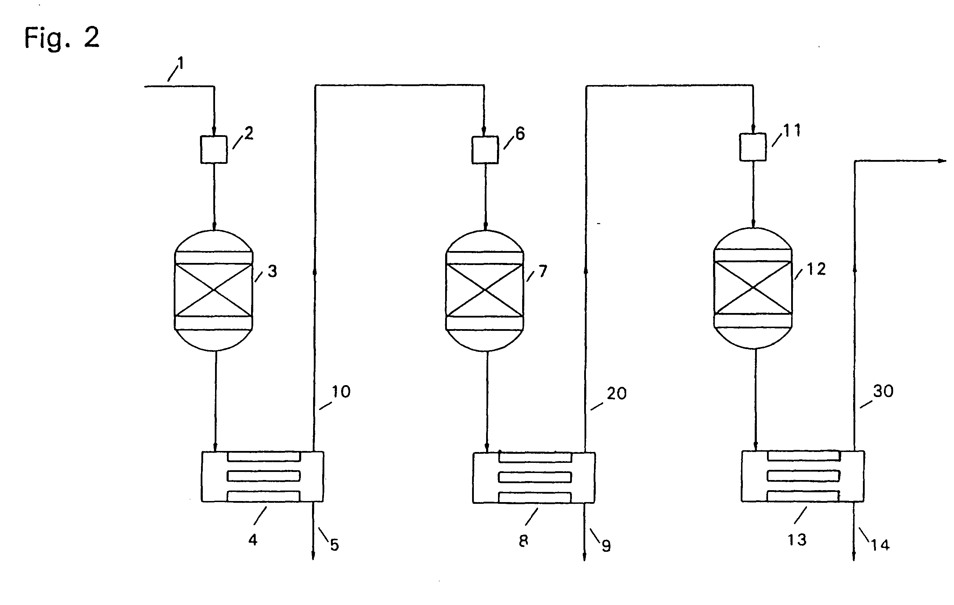

The unit shown in Figure 2 has three catalytic beds instead of the two catalytic beds of Figure 1 but otherwise has many similarities with the plant shown in Figure 1 and like parts in the two Figures are indicated by the same reference numerals.

The unit and its operating parameters are similar to those of Figure 1 as far as the exits 9 and 20 from the condenser 8. In the Figure 2 configuration, however, the gas outlet line 20 from the condenser 8 leads in sequence to a third steam-heated reheater 11, a third alumina catalyst bed 12 and to a further water-cooled condenser 13, which has a liquid sulphur outlet 14 and gas outlet line 30.

The exit vapours from the condenser 8 thus pass to the third reheater 11 which is operated in cyclic mode in a similar way to the second reheater 6 although normally at lower temperatures. The process vapour outlet temperature from the reheater 11 is cycled typically between a 125 to 160°C lower temperature and a 200 to 220°C upper temperature, with a similar time period to the cycle of reheater 6. Although increased sulphur conversion can be achieved if the cycles of the second reheater 6 and third reheater 11 are unrelated, an overall increase in conversion was achieved by operating these reheaters out of phase. Thus any loss of conversion due to incomplete establishment of the cold zone in the second catalyst bed 7 was compensated for by the cold zone in the third catalyst bed 12. The out-of-phase operation was also of benefit in evening out the heating utility demand, which in the Figure 1 single-cycled bed operation was cyclic.

The third catalyst bed 12 and the condenser 13 operate in a similar manner to the second catalyst bed 7 and condenser 8. Condensed sulphur is removed through the outlet 14 and the remaining vapour stream is discharged through the exit line 30 for incineration or further treatment.

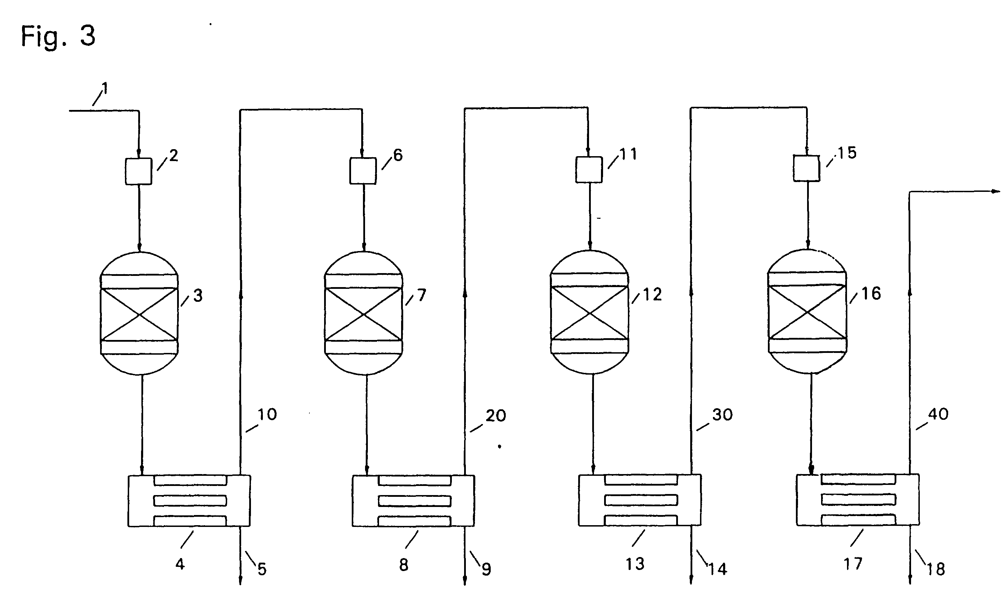

The unit shown in Figure 3 has four catalytic beds but again has many similarities with the units shown in Figures 1 and 2 and like parts in the Figures are again indicated by the same reference numerals.

The gas outlet line 30 from the condenser 13 leads in the Figure 3 arrangement to a fourth steam-heated reheater 14, a fourth alumina catalyst bed 16 and a further water-cooled condenser 17, which has a liquid sulphur outlet 18 and gas outlet line 40.

The four-bed catalytic system of Figure 3 can be operated cyclically on one or more of the beds. The first catalytic stage is normally operated at a steady high temperature to destroy carbon-sulphur compounds, with one or more of the last three stages being cycled.

The operation of the first three stages is generally as described under Figure 2. Process gases from the condenser 13 pass to the reheater 15, catalyst bed 16 and condenser 17, all of which operate in a similar manner to the respective reheater 11, catalyst bed 12 and condenser 13.

Condensed sulphur is removed through the outlet 18 and the remaining vapour stream is discharged through the exit line 40 for incineration or further treatment.

As mentioned previously, it is normal to produce utility steam from the condensers. However, the final condensers 13 and 17 produce comparatively little steam (compared with the waste heat boiler or condenser 4) and they can be cooled to low temperature (typically 120 to 150°C) by producing very low pressure steam (typically 0.2 MPa absolute, 1 bar g) which is normally condensed against air or cooling water.

In this manner the lower cycle temperature for bed 4 can be reduced to 125 to 160°C and so high efficiencies of sulphur recovery obtained, typically about 99%. The low temperature operation can be extended to condenser 8 if the utility balance of the installation permits, resulting in slightly higher sulphur conversion.

Examples:

The following examples illustrate the process of the invention but the invention is not limited to the specific details contained therein.

The feed used in the following three examples was a typical refinery feed derived from an amine unit regeneration system and ammonia bearing gases from the sour water stripper (SWS), having the following compositions:

|  | Amine Acid Gas mole % | SWS Acid Gas mole % |
|---|---|---|
| $H_2S$ | 94.2 | 38.9 |
| $H_2O$ | 4.1 | 23.8 |
| $H_2$ | 0.6 | 0.0 |
| $NH_3$ | 0.0 | 37.3 |
| Methane | 0.4 | 0.0 |
| Ethene | 0.2 | 0.0 |
| Propane | 0.5 | 0.0 |

In these examples the SWS acid gas flow was 20% of the amine acid gas flow.

Steady state operation conditions for a 3-stage plant are typically as follows:-

|  | Condenser following the: | | | |
|---|---|---|---|---|
|  | Furnace | 1st Bed | 2nd Bed | 3rd Bed |
| Gas temperature at condenser exit | 182°C | 171°C | 160°C | 138°C |
|  | Reheater (RHT) | | | |
|  | RHT. 1 | RHT. 2 | RHT. 3 | |
| Gas temperature at reheater exit | 227°C | 218°C | 210°C | |

Recovered sulphur from steady state operation was calculated to be as follows:-

| After 2 stages | 95.0% |
|---|---|
| After 3 stages | 97.4% |

Example 1.

This example employed a two-stage sulphur recovery unit as illustrated in Figure 1, operating with the quoted typical refinery feed and using cyclic operation according to the invention on the second bed.

The first bed was operated at a steady temperature. The second bed was cycled between a high temperature of 218°C and a low temperature of 171°C. The cycle time was 60 minutes (hot to cold to hot).

The sulphur recovery in cyclic operation was found to be 96.1% This represents a 22% reduction in sulphur emissions compared with steady state operation.

Example 2.

This example employed a three-stage sulphur recovery unit as illustrated in Figure 2, operating with typical refinery feed and using cyclic operation according to this invention on the third bed.

The third bed was cycled between a high temperature of 210°C and a low temperature of 160°C. The cycle time was 60 minutes (hot to cold to hot).

Sulphur recovery in cyclic operation was 98.2% This corresponds to a 30% reduction in sulphur emissions compared with the steady state operation.

Example 3.

This example employed a three-stage sulphur recovery unit as illustrated in Figure 2, operating with typical refinery feed and using cyclic operation according to this invention on the second and third beds.

The temperatures in the second and third beds were as follows:

| Upper Temperature | | Lower Temperature | |
|---|---|---|---|
| Bed 2 | Bed 3 | Bed 2 | Bed 3 |
| 218°C | 210°C | 171°C | 160°C |

The sulphur recovery in cyclic operation was 98.5% This corresponds to a 40% reduction in sulphur emissions.

Example 4.

This example employed a three-stage sulphur recovery unit as illustrated in Figure 2, operating with a feedstock from a natural gas plant and using cyclic operation according to this invention on the second and third beds.

| Feed Composition: | mole. % |
|---|---|
| $H_2S$ | 31.3 |
| $CO_2$ | 62.6 |
| $H_2O$ | 5.0 |
| COS | 0.1 |
| Hydrocarbon | 1.0 |

This feedstock has a significant $CO_2$ content which usually causes a reduction in the sulphur recovery.

Steady state operation with a conventional temperature profile showed 96.8% sulphur recovery.

The feed temperature was cycled to the final two beds. The inlet temperature to the second bed was cycled between 218°C and 171°C and the inlet temperature to the third bed was cycled between 210°C and 165°C, with a cycle period of two hours. A sulphur recovery efficiency of 98.0% and a reduction in sulphur emissions of about 38% was obtained.

The above four examples show the improvement in sulphur recovery available to a typical refinery or gas plant without modification to the existing utility systems. Higher recoveries are achieved if the condenser temperatures are reduced. The following examples show the effect of a low condenser temperature upstream of the third catalyst bed and the addition of a fourth stage operating at low temperature.

Example 5

This example, again with a three-stage unit as in Figure 2, shows the use of a low temperature condenser upstream of the third catalytic stage with a refinery feed (as in examples 1 to 3). The final two stages were varied in temperature as in example 3. The cycle time was 60 minutes.

The temperatures in the second and third beds were as follows:

| Upper Temperature | | Lower Temperature | |
|---|---|---|---|
| Bed 2 | Bed 3 | Bed 2 | Bed 3 |
| 218°C | 210°C | 171°C | 138°C |

The sulphur recovery in steady operation was 97.4% The sulphur recovery in cyclic operation was 98.7% This corresponds to a 50% reduction in sulphur emissions.

Example 6

This example, using a four-bed unit as illustrated in Figure 3, added a fourth stage on a three stage refinery system operated similarly to that of Example 3, but without cycling the first three beds. The fourth stage inlet temperature in steady state was 210°C. For cyclic operation, the lower temperature was 138°C and upper temperature was 210°C. The cycle period was 30 minutes.

The sulphur recovery efficiency in steady operation was 97.8% The sulphur recovery efficiency in cyclic operation was 98.8%

Example 7

The four stage system described in Example 6 was varied so that the second and third beds were also operated cyclically as in Example 3. In these conditions the sulphur recovery efficiency when the fourth bed was in cyclic operation was increased to 99.0%.

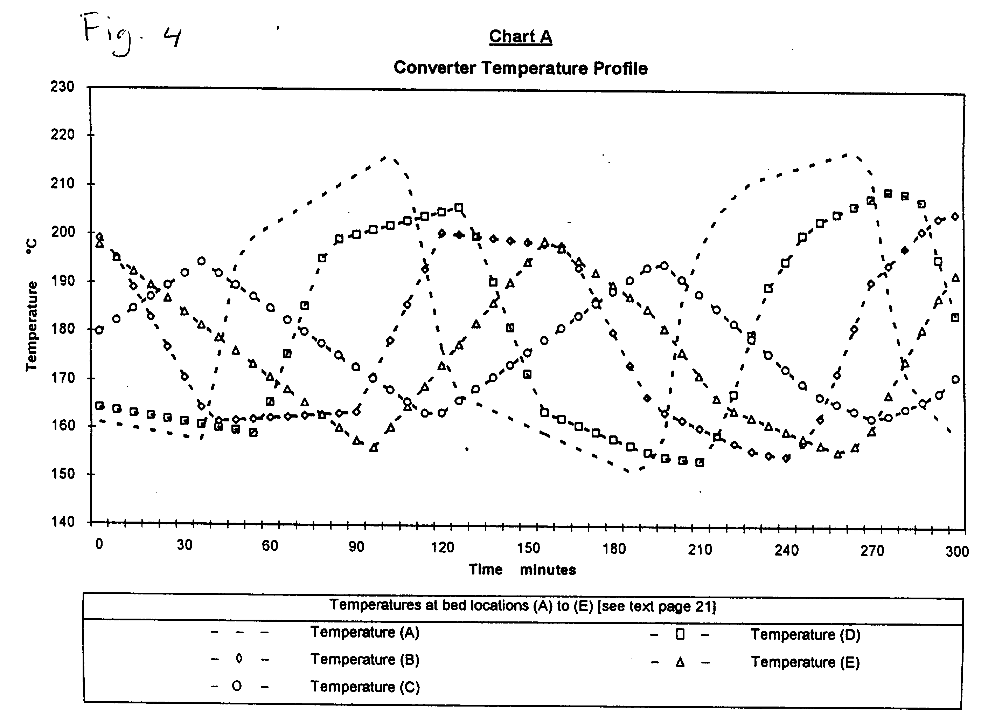

The accompanying Chart A (Figure 4) shows the temperature profile in the third converter (catalyst bed) operating according to the process of the invention, in a Claus plant in a refinery. The plotted temperatures were taken at:

(A) the bed inlet (effectively at the bed surface);
(B) middle of the bed;
(C) bed outlet;
(D) top portion of the bed (probe at about 150 mm from the upper surface of the bed) and
(E) bottom portion of the bed (probe at about 150 mm from the lower surface of the bed).

The chart, which covers two complete cycles, shows both the simultaneous presence of "hot" and "cold" zones in the bed for a high proportion of the cycle period and the movement of these zones through the bed as each cycle progresses.

## Claims

1. A process for continuously recovering elemental sulphur from a sulphur-bearing feed gas stream in a bed of catalytic material in which the sulphurous material in the gas stream is converted to elemental sulphur, characterised in that the gas stream is moved unidirectionally through the bed and cold and hot temperature zones are created in the bed by intermittent application of heat to the feed gas stream so that a varying temperature profile is cyclically moved through the bed such that at least part of the bed is maintained as a "cold" zone at a temperature in the range 125 to 180°C to promote the conversion to elemental sulphur and each part of the bed periodically becomes a "hot" zone at a temperature in the range 190 to 375°C to effect removal from the bed of elemental sulphur deposited thereon, wherein the temperature profile is such that the bed contains more than one cold zone for at least part of the cycle and more than one hot zone for at least part of the cycle.

2. A process as claimed in claim 1, wherein the temperature profile is such that for at least part of the cycle the bed contains more than one cold zone and more than one hot zone.

3. A process as claimed in claim 1 or claim 2, wherein the proportion of the bed that is within the required cold temperature range at any given time is 10 to 40% of the total bed volume.

4. A process as claimed in any preceding claim, wherein the temperature in the hot zone is in the range 200 to 300°C.

5. A process as claimed in any preceding claim, wherein the total cycle time is in the range 30 minutes to 4 hours.

6. A process as claimed in any preceding claim, wherein more than one bed of catalyst is employed.

## Patentansprüche

1. Verfahren zur kontinuierlichen Gewinnung von elementarem Schwefel aus einem schwefelhaltigen Einsatzgas in einem Bett aus katalytischem Material, bei dem das schwefelhaltige Material im Gasstrom in elementaren Schwefel umgewandelt wird, dadurch gekennzeichnet, daß der Gasstrom in einer Richtung durch das Bett geleitet wird und in dem Bett durch die zeitweilige Einwirkung von Wärme kalte und heiße Temperaturzonen erzeugt werden, so daß ein variierendes Temperaturprofil zylindrisch so durch das Bett bewegt wird, daß wenigstens ein Teil des Betts als eine "kalte" Zone bei einer Temperatur im Bereich von 125 °C bis 180 °C gehalten wird, um die Umwandlung in elementaren Schwefel zu fördern, und jeder Teil des Betts periodisch eine "heiße" Zone bei einer Temperatur im Bereich von 190 bis 375 °C wird, um das Entfernen des auf dem Bett abgeschiedenen Schwefels davon zu bewirken, wobei das Temperaturprofil so ist, daß das Bett bei wenigstens einem Teil des Cyclus nicht mehr als eine kalte Zone und bei wenigstens einem Teil des Cyclus mehr als eine heiße Zone enthält.

2. Verfahren nach Anspruch 1, wobei das Temperaturprofil so ist, daß das Bett bei wenigstens einem Teil des Cyclus mehr als eine kalte Zone und mehr als eine heiße Zone enthält.

3. Verfahren nach Anspruch 1 oder Anspruch 2, wobei der Anteil des Betts, der in einem beliebigen, vorgegebenen Zeitpunkt in dem erforderlichen kalten Temperaturbereich liegt, 10 bis 40 % des gesamten Bettvolumens beträgt.

4. Verfahren nach einem beliebigen vorhergehenden Anspruch, wobei die Temperatur in der heißen Zone im Bereich von 200 bis 300 °C liegt.

5. Verfahren nach einem beliebigen vorhergehenden Anspruch, wobei die gesamte Cyclusdauer im Bereich von 30 min bis 4 h liegt.

6. Verfahren nach einem beliebigen vorhergehenden Anspruch, wobei mehr als ein Katalysatorbett eingesetzt wird.

**Revendications**

1. Un procédé pour retirer en continu du soufre élémentaire d'un courant d'alimentation gazeux contenant du soufre dans un lit de matière catalytique dans lequel la matière sulfureuse contenue dans le courant gazeux est convertie en soufre élémentaire, caractérisé en ce que le courant gazeux est déplacé unidirectionnellement à travers le lit et des zones de température froide et chaude sont créées dans le lit par application intermittente de chaleur au courant d'alimentation gazeux de manière à déplacer cycliquement un profil de température variable à travers le lit en sorte qu'il y ait toujours au moins une partie du lit à l'état de zone "froide" à une température comprise dans l'intervalle de 125 à 180°C pour activer la conversion en soufre élémentaire et que chaque partie du lit devienne périodiquement une zone "chaude" à une température comprise dans l'intervalle de 190 à 375°C pour enlever du lit le soufre élémentaire qui y est déposé, le profil de température étant tel que le lit contient plus d'une zone froide pendant au moins une partie du cycle et plus d'une zone chaude pendant au moins une partie du cycle.

2. Un procédé tel que revendiqué dans la revendication 1, dans lequel le profil de température est tel que, pendant au moins une partie du cycle, le lit contient plus d'une zone froide et plus d'une zone chaude.

3. Un procédé tel que revendiqué dans la revendication 1 ou la revendication 2, dans lequel la portion du lit qui est dans l'intervalle requis de température froide à tout instant donné est de 10 à 40 % du volume total du lit.

4. Un procédé tel que revendiqué dans l'une quelconque des revendications précédentes, dans lequel la température dans la zone chaude se situe dans l'intervalle de 200 à 300°C.

5. Un procédé tel que revendiqué dans l'une quelconque des revendications précédentes, dans lequel le temps de cycle total se situe dans l'intervalle de 30 minutes à 4 heures.

6. Un procédé tel que revendiqué dans l'une quelconque des revendications précédentes, dans lequel on utilise plus d'un lit de catalyseur.

Fig. 1

Fig. 2

Fig. 3

Fig. 4

## Converter Temperature Profile

Temperatures at bed locations (A) to (E) [see text page 21]

| | | |
|---|---|---|
| – – – | Temperature (A) | – □ – Temperature (D) |
| – ◊ – | Temperature (B) | – Δ – Temperature (E) |
| – ○ – | Temperature (C) | |

EP 0 719 236 B1

14